# EUROPÄISCHE PATENTANMELDUNG

(11) **EP 1 932 741 A2**
(43) Veröffentlichungstag der Anmeldung: **18.06.2008**
(21) Anmeldenummer: 07021058.8
(22) Anmeldetag: 27.10.2007
(51) Int. Cl.: B60W 20/00, B60K 6/48, B60W 10/02, B60W 10/06, B60W 10/08, B60K 6/387

(54) **Hybrid-Antrieb mit Doppelkupplung**

(30) Priorität: 14.12.2006 DE 102006058947
(71) Anmelder: Dr. Ing. h.c. F. Porsche Aktiengesellschaft, 71287 Weissach (DE)
(72) Erfinder: Kluge, Marc, 74354 Besigheim (DE); Sander, Edmund, 71229 Leonberg (DE)

(57) **Zusammenfassung**

Die vorliegende Erfindung betrifft eine Doppelkupplung (1) für einen Hybrid-Antrieb eines Kraftfahrzeuges, mit einer von einem Verbrennungsmotor (7) antreibbaren Eingangswelle (2) und einer mit einem Getriebe (3) verbundenen Ausgangswelle (4). Dabei ist eine koaxial zur Ausgangswelle (4) verlaufende Zwischenwelle (6) von einem Elektromotor (5) antreibbar, wobei die Eingangswelle (2) und die Zwischenwelle (6) über eine erste Kupplung (K1) der Doppelkupplung (1) miteinander kuppelbar sind. Erfindungswesentlich ist dabei, dass die Zwischenwelle (6) und die Ausgangswelle (4) über eine zweite Kupplung (K2) der Doppelkupplung (1) miteinander kuppelbar sind.

## Beschreibung

Die vorliegende Erfindung betrifft eine Doppelkupplung für einen Hybrid-Antrieb eines Kraftfahrzeuges gemäß dem Oberbegriff des Anspruchs 1. Die Erfindung betrifft außerdem ein Kraftfahrzeug mit einer derartigen Doppelkupplung.

Im allgemeinen bezeichnet ein Hybridfahrzeug ein Fahrzeug, welches eine Mehrzahl von Energiequellen verwendet, beispielsweise einen Verbrennungsmotor und einen Elektromotor. Um einen möglichst hohen energetischen Wirkungsgrad erzielen zu können, werden bei Hybridfahrzeugen üblicherweise so genannte Parallel-Hybrid-Antriebe eingesetzt, welche es ermöglichen, dass der Elektromotor und der Verbrennungsmotor nicht nur alternativ, sondern auch kumulativ Drehmoment in ein Getriebe einleiten. Im Unterschied zu einem Serien-Hybrid-Antrieb, bei welchem Energie zuerst von mechanischer Energie des Verbrennungsmotors in elektrische Energie umgewandelt und dann zum Betreiben des Elektromotors verwendet wird, arbeitet ein Parallel-Hybrid-Antrieb nicht immer an einem optimalen Arbeitspunkt, da der Verbrennungsmotor und der Elektromotor mechanisch miteinander durch ein Getriebe gekuppelt sind. Deshalb wird hier im Stand der Technik üblicherweise die Verwendung eines Doppelkupplungsgetriebes vorgeschlagen.

Ein derartiges Doppelkupplungsgetriebe ist beispielsweise aus der DE 10 2004 062 530 A1 bekannt, das so ausgebildet ist, dass es entsprechend eines jeweiligen Betriebszustandes unter Erreichung eines hohen Wirkungsgrades ein Drehmoment vom Elektromotor und/oder ein Drehmoment vom Verbrennungsmotor in den Antriebsstrang einleiten kann.

Die vorliegende Erfindung beschäftigt sich mit dem Problem, für eine Doppelkupplung der gattungsgemäßen Art eine verbesserte oder zumindest eine andere Ausführungsform anzugeben, welche insbesondere bei der Verwendung in einem Hybrid-Antrieb eine kompakte Bauform desselben erlaubt.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Parallel-Hybrid-Antrieb für ein Kraftfahrzeug zwei üblicherweise an- und abtriebseitig des Elektromotors angeordnete Kupplungen durch eine handelsübliche Doppelkupplung zu ersetzen und dadurch eine Baulänge des Antriebsstranges deutlich zu verkürzen. Die verwendete Doppelkupplung weist dabei eine, von einem Verbrennungsmotor antreibbare Eingangswelle und eine, mit einem Getriebe verbundene Ausgangswelle auf, wobei zusätzlich eine, von einem Elektromotor antreibbare koaxial zur Ausgangswelle verlaufende Zwischenwelle vorgesehen ist. Die Eingangswelle und die Zwischenwelle sind über eine erste Kupplung der Doppelkupplung miteinander kuppelbar, während die Zwischenwelle und die Ausgangswelle über eine zweite Kupplung der Doppelkupplung miteinander kuppelbar sind. Der Elektromotor ist dabei direkt mit der Zwischenwelle antriebsverbunden. Durch ein betriebszustandsabhängiges Öffnen bzw. Schließen der beiden Kupplungen der Doppelkupplung lassen sich somit einzelne Betriebszustände einfach realisieren. So kann beispielsweise rein verbrennungsmotorisch gefahren werden, sofern beide Kupplungen geschlossen sind und der Elektromotor nicht bestromt wird. In diesem Zustand kann der Elektromotor als Generator wirken und eine Energiespeichereinrichtung aufladen. Soll kein Antriebsmoment auf das Getriebe übertragen werden, so kann die zweite Kupplung geöffnet werden und über die geschlossene erste Kupplung der Elektromotor durch den Verbrennungsmotor angetrieben und zum Laden der Energiespeichereinrichtung verwendet werden. Bei einem rein elektrischen Fahren hingegen ist lediglich die zweite Kupplung geschlossen und die erste Kupplung geöffnet, so dass der Verbrennungsmotor vom Elektromotor abgekoppelt ist. In einem Boostbetrieb sind beide Kupplungen geschlossen und sowohl der Elektromotor als auch der Verbrennungsmotor leiten ein Drehmoment in das Getriebe ein.

Zweckmäßig verläuft die Ausgangswelle koaxial durch den Elektromotor hindurch. Hierdurch kann eine besonders kompakte und bauraumminimierende Bauweise erreicht werden, da der Elektromotor im Unterschied zum Stand der Technik eng benachbart zur Doppelkupplung angeordnet und nicht abseits von dieser eingebaut ist, wodurch zusätzliche Drehmomentübertragungselemente vorgesehen werden müssten. Insbesondere letzteres spart auch Gewicht, was neben dem geringen Bauraumbedarf insbesondere im Sportwagenbau von besonderem Vorteil ist.

Bei einer weiteren vorteilhaften Ausführungsform der erfindungsgemäßen Lösung ist die Eingangswelle koaxial zur Ausgangswelle angeordnet. Die koaxiale Ausrichtung der Eingangswelle zur Ausgangswelle bietet den großen Vorteil, dass keine Kraftumlenkung, beispielsweise mit Hilfe eines Kardangelenkes, erforderlich ist, und dadurch lediglich geringe Übertragungs- bzw. Übersetzungsverluste auftreten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Doppelkupplung für ein Hybridfahrzeug,
- Fig. 2a bis d: unterschiedliche Betriebszustände der erfindungsgemäßen Doppelkupplung,
- Fig. 3: eine erfindungsgemäße Doppelkupplung mit einer zusätzlichen dritten Kupplung,
- Fig. 4a bis d: unterschiedliche Betriebszustände der erfindungsgemäßen Doppelkupplung mit der zusätzlichen dritten Kupplung.

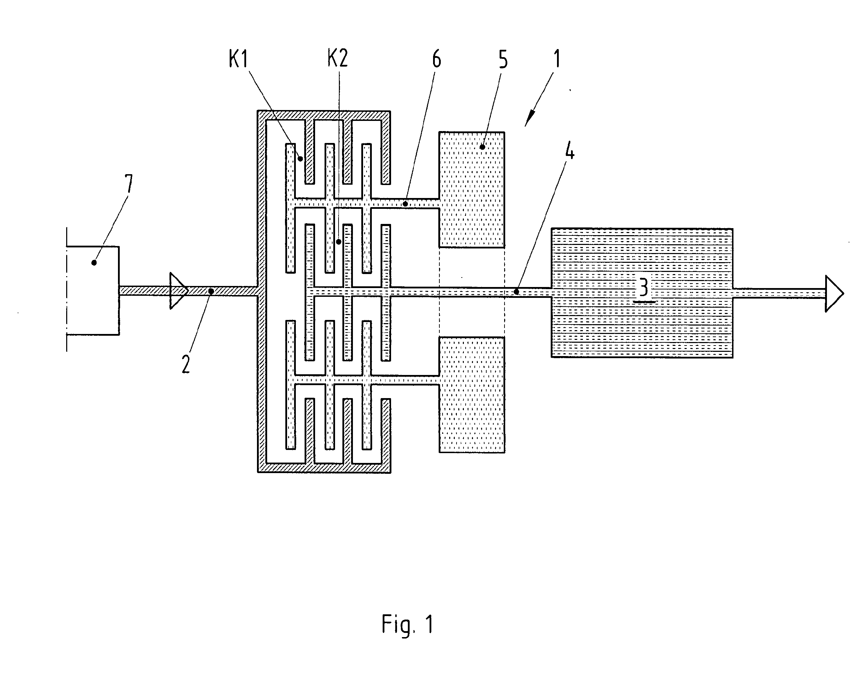

Entsprechend der Fig. 1 weist eine erfindungsgemäße Doppelkupplung 1 für einen im übrigen nicht gezeigten Hybrid-Antrieb eines Kraftfahrzeuges, eine, von einem Verbrennungsmotor 7 antreibbare Eingangswelle 2 auf. Abtriebsseitig besitzt die Doppelkupplung 1 eine, mit einem Getriebe 3 verbundene Ausgangswelle 4. Die Eingangswelle 2 und die Ausgangswelle 4 sind dabei gemäß der Fig. 1 koaxial zueinander angeordnet. Des Weiteren weist die Doppelkupplung 1 eine, von einem Elektromotor 5 antreibbare und koaxial zur Ausgangswelle 4 verlaufende Zwischenwelle 6 auf. Die Zwischenwelle 6 ist dabei ebenfalls koaxial zur Eingangswelle 2 bzw. zur Ausgangswelle 4 angeordnet. Des Weiteren ist die Zwischenwelle 6 vorzugsweise als Hohlwelle ausgebildet, innerhalb welcher die Ausgangswelle 4 verläuft.
Generell weist die Doppelkupplung 1 zwei Kupplungen, nämlich eine erste Kupplung K1 und eine zweite Kupplung K2 auf. Die erste Kupplung K1 ist dabei zwischen der Eingangswelle 2 und der Zwischenwelle 6 angeordnet und verbindet in geschlossenem Zustand die beiden Wellen 2 und 6. Über die zweite Kupplung K2 der Doppelkupplung 1 sind die Zwischenwelle 6 und die Ausgangswelle 4 miteinander kuppelbar. Der Elektromotor 5 ist dabei direkt mit der Zwischenwelle 6 verbunden.

Der Hybrid-Antrieb ist dabei vorzugsweise als Parallel-Hybrid-Antrieb ausgebildet, so dass der Verbrennungsmotor 7 und der Elektromotor 5 nicht nur alternativ, sondern auch kumulativ Drehmoment in das Getriebe 3 einleiten können.

Durch die erfindungsgemäße Doppelkupplung 1 ist es möglich, eine serienmäßige Doppelkupplung in einen Hybrid-Antrieb zu integrieren und dadurch zwei bisher separat verbaute Kupplungen, welche üblicherweise antriebs- und abtriebsseitig des Elektromotors 5 angeordnet waren, einzusparen. Insbesondere erlaubt die erfindungsgemäße Doppelkupplung 1 eine deutlich kompaktere Bauweise des Antriebsstranges des Hybrid-Antriebes, was im Hinblick auf ein immer geringer werdendes Bauraumangebot von besonderem Vorteil ist.

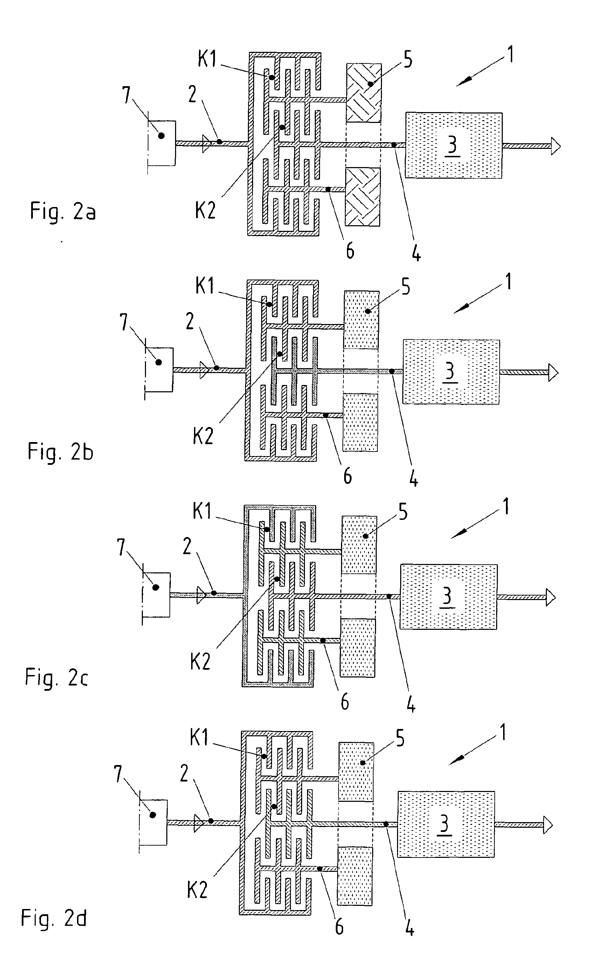

Gemäß den Fig. 2a bis 2d sind nun unterschiedliche Betriebszustände der Doppelkupplung 1 bzw. des Hybrid-Antriebes gezeigt. In Fig. 2a sind sowohl die erste Kupplung K1 als auch die zweite Kupplung K2 der Doppelkupplung 1 geschlossen und der Elektromotor 5 ist abgeschaltet. In diesem Zustand fährt das mit dem erfindungsgemäßen Hybrid-Antrieb ausgerüstete Kraftfahrzeug rein verbrennungsmotorisch, wobei gleichzeitig der Elektromotor 5 als Generator verwendet werden kann und eine nicht gezeigte Energiespeichereinrichtung, beispielsweise ein Fahrzeugbatterie, aufladen kann. Beim Betriebszustand gemäß der Fig. 2a treibt somit der Verbrennungsmotor 7 die Eingangswelle 2 an, deren Drehmoment aufgrund der geschlossenen Kupplung K1 auf die Zwischenwelle 6 übertragen wird. Da die Zwischenwelle 6 direkt mit dem Elektromotor 5 verbunden ist, treibt der Verbrennungsmotor 7 auch den Elektromotor 5 an. Aufgrund der ebenfalls geschlossenen zweiten Kupplung K2 wird das von der Eingangswelle 2 auf die Zwischenwelle 6 übertragene Drehmoment an die Ausgangswelle 4 übertragen, welche mit dem Getriebe 3 antriebsverbunden ist.

Gemäß der Fig. 2b ist ein Ladebetriebszustand gezeigt, in welchem das mit dem erfindungsgemäßen Hybrid-Antrieb ausgerüstete Kraftfahrzeug nicht bewegt wird. Das Drehmoment wird hierbei vom Verbrennungsmotor 7 erzeugt und auf die Eingangswelle 2 übertragen. Da die Kupplung K1 geschlossen ist, wird das Drehmoment an die Zwischenwelle 6 und damit an den Elektromotor 5 weitergegeben, welcher hier ausschließlich als Generator zum Aufladen der Fahrzeugbatterie verwendet wird. Die zweite Kupplung K2 der Doppelkupplung 1 ist geöffnet, so dass von der Zwischenwelle 6 kein Drehmoment auf die Ausgangswelle 4 bzw. das Getriebe 3 übertragen wird.

Gemäß der Fig. 2c ist ein Elektromotor-Betriebszustand gezeigt, in welchem das Kraftfahrzeug rein elektrisch betrieben wird. Der Elektromotor 5 erzeugt hierbei ein Drehmoment, welches er an die Zwischenwelle 6 weitergibt. Aufgrund der geschlossenen Kupplung K2 wird das Drehmoment von der Zwischenwelle 6 auf die Ausgangswelle 4 und damit an das Getriebe 3 übertragen. Demgegenüber ist die erste Kupplung K1 geöffnet, so dass von der Zwischenwelle 6 kein Drehmoment an die Eingangswelle 2 und damit an den Verbrennungsmotor 7 übertragen werden kann. Denkbar ist jedoch, dass zu einem Starten des Verbrennungsmotors 7 die erste Kupplung K1 geschlossen und die zweite Kupplung K2 zumindest leicht geöffnet wird, so dass der Elektromotor 5 den Verbrennungsmotor 7 anlassen bzw. anschleppen kann.

In Fig. 2d ist ein so genannter Boost-Betriebszustand gezeigt, bei welchem sowohl die erste Kupplung K1 als auch die zweite Kupplung K2 der Doppelkupplung 1 geschlossen sind und sowohl der Verbrennungsmotor 7 als auch der Elektromotor 5 ein Drehmoment erzeugen. Das vom Verbrennungsmotor 7 erzeugte Drehmoment wird dabei über die Eingangswelle 2 aufgrund der geschlossenen Kupplung K1 an die Zwischenwelle 6 übertragen, die gleichzeitig vom Elektromotor 5 angetrieben ist. Das kumulative Drehmoment an der Zwischenwelle 6 wird dann aufgrund der geschlossenen zweiten Kupplung K2 an die Ausgangswelle 4 und damit an das Getriebe 3 übertragen. Ein derartiger Boost-Betriebszustand kann beispielsweise dann sinnvoll sein, wenn eine besonders schnelle Beschleunigung des Kraftfahrzeuges erreicht werden soll oder wenn die Leistung des Elektromotors 5, beispielsweise aufgrund von zumindest teilweise entladenen Batterien, nicht mehr zum alleinigen Fahren des Kraftfahrzeuges ausreicht.

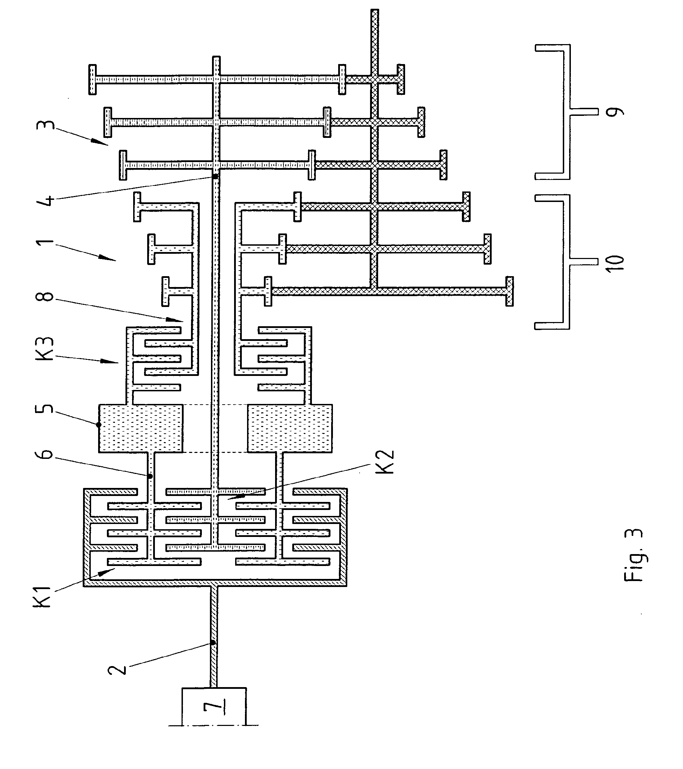

In Fig. 3 ist eine erfindungsgemäße Doppelkupplung 1 gezeigt, wobei hier zwischen dem Elektromotor 5 und einer koaxial zur Ausgangswelle 4 zum Getriebe 3 hin verlaufenden Außenabtriebswelle 8 eine dritte Kupplung K3 angeordnet ist. Dabei kann die Ausgangswelle 4 der Doppelkupplung 1 mit einer ersten Gruppe 9 von Gängen, beispielsweise mit ungeraden Gängen, und die Außenabtriebswelle 8 mit einem zweiten Gruppe 10 von Gängen, beispielsweise mit geraden Gängen, antriebsverbunden sein.

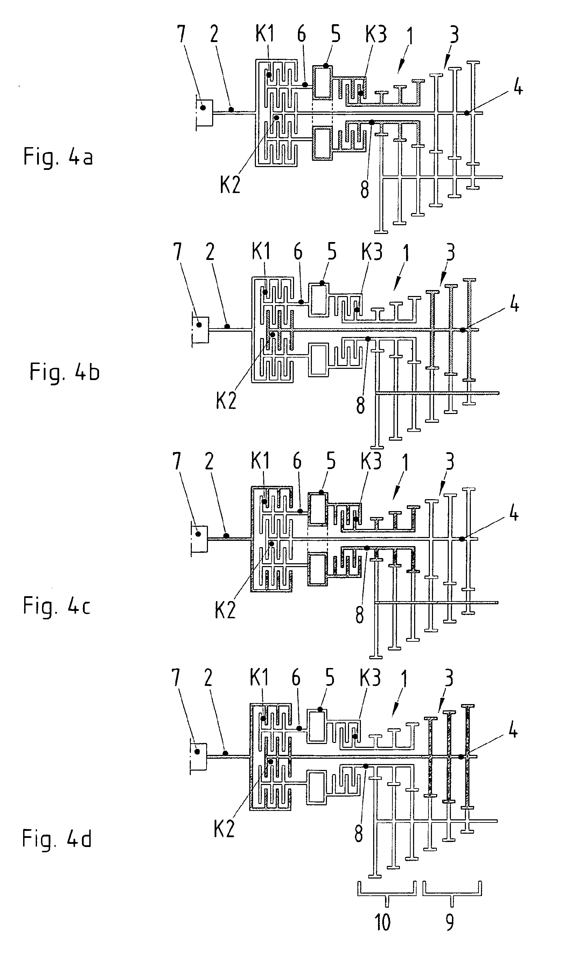

In den Fig. 4a bis 4d sind dabei wiederum unterschiedliche Betriebszustände gezeigt. Gemäß Fig. 4a ist ein Verbrennungsmotor-Antriebszustand gezeigt, in welchem die beiden Kupplungen K1 und K2 der Doppelkupplung 1 geschlossen sind, während die dritte Kupplung K3 geöffnet ist. Der Elektromotor 5 ist dabei abgeschaltet. Vom Verbrennungsmotor 7 wird ein Drehmoment auf die Eingangswelle 2 und von dieser über die erste Kupplung K1 an die Zwischenwelle 6 und über die zweite Kupplung K2 an die Ausgangswelle 4 übertragen. Die Ausgangswelle 4 ist dabei vorzugsweise mit der ersten Gruppe 9 von Gängen, also beispielsweise den ungeraden Gängen antriebsverbindbar. Da die Zwischenwelle 6 und damit der Elektromotor 5 ebenfalls vom Verbrennungsmotor 7 angetrieben werden, kann in diesem Betriebszustand der Elektromotor 5 als Generator zum Aufladen der Fahrzeugbatterie genutzt werden.

Gemäß Fig. 4b ist ein Verbrennungsantriebszustand gezeigt, bei welchem vom Verbrennungsmotor 7 die zweite Gruppe 10 von Gängen, also beispielsweise die geraden Gänge, antreibbar sind. Hierzu ist die erste Kupplung K1 der Doppelkupplung 1 geschlossen, ebenso wie die dritte Kupplung K3. Der Elektromotor 5 ist abgeschaltet. In dem Betriebszustand gemäß der Fig. 4b wird vom Verbrennungsmotor 7 ein Drehmoment auf die Eingangswelle 2 und über die geschlossene erste Kupplung K1 der Doppelkupplung 1 an die Zwischenwelle 6 übertragen. Die Zwischenwelle 6 ist direkt mit dem Elektromotor 5 und über die geschlossene dritte Kupplung K3 mit der Außenabtriebswelle 8 antriebsverbunden. In diesem Betriebszustand kann der Elektromotor 5 ebenfalls als Generator zum Laden einer Fahrzeugbatterie verwendet werden. Ein Fahren in diesem Betriebszustand erfolgt dabei ausschließlich verbrennungsmotorisch in der zweiten Gruppe 10 von Gängen, beispielsweise in den geraden Gängen.

In Fig. 4c ist ein Elektroantriebszustand gezeigt, bei welchem ausschließlich die zweite Kupplung K2 der Doppelkupplung 1 geschlossen ist, während die erste Kupplung K1 und die dritte Kupplung K3 geöffnet sind. Der Verbrennungsmotor 7 ist in diesem Elektroantriebszustand abgeschaltet. Der Elektromotor 5 erzeugt dabei ein Drehmoment, welches er an die Zwischenwelle 6 und über die geschlossene Kupplung K2 an die Ausgangswelle 4 überträgt. Die Ausgangswelle 4 ist hierbei mit der ersten Gruppe 9 von Gängen verbindbar.

Gemäß der Fig. 4d ist ebenfalls ein Elektroantriebszustand gezeigt, bei welchem der Elektromotor 5 ein Drehmoment erzeugt, welches er aufgrund der geschlossenen dritten Kupplung K3 an die Außenabtriebswelle 8 und damit an die zweite Gruppe 10 von Gängen überträgt. Die erste Kupplung K1 und die zweite Kupplung K2 der Doppelkupplung 1 sind geöffnet, so dass eine Übertragung eines Drehmomentes von der Zwischenwelle 6 weder auf die Eingangswelle 2 noch auf die Ausgangswelle 4 erfolgen kann.

Zum Wiederstarten des Verbrennungsmotors 7 kann bei einem Elektroantriebszustand gemäß den Fig. 4c und 4d die erste Kupplung K1 der Doppelkupplung 1 geschlossen werden, so dass der Elektromotor 5 den Verbrennungsmotor 7 anschleppt.

Allen gezeigten Ausführungsformen der erfindungsgemäßen Doppelkupplung 1 ist dabei gemein, dass die Ausgangswelle 4 koaxial durch den Elektromotor 5 verläuft und dadurch eine besonders kompakte Bauweise erreicht werden kann.

## Patentansprüche

1. Doppelkupplung (1) für einen Hybrid-Antrieb eines Kraftfahrzeugs,
- mit einer von einem Verbrennungsmotor (7) antreibbaren Eingangswelle (2),
- mit einer, mit einem Getriebe (3) verbundenen Ausgangswelle (4),
- mit einer von einem Elektromotor (5) antreibbaren und koaxial zur Ausgangswelle (4) verlaufenden Zwischenwelle (6),
- wobei die Eingangswelle (2) und die Zwischenwelle (6) über eine erste Kupplung (K1) der Doppelkupplung (1) miteinander kuppelbar sind,
**dadurch gekennzeichnet, dass** die Zwischenwelle (6) und die Ausgangswelle (4) über eine zweite Kupplung (K2) der Doppelkupplung (1) miteinander kuppelbar sind.

2. Doppelkupplung nach Anspruch 1, **dadurch gekennzeichnet, dass** die Eingangswelle (2) koaxial zur Ausgangswelle (4) angeordnet ist.

3. Doppelkupplung nach Anspruch 1 oder 2, **dadurch gekennzeichnet, dass** der Hybrid-Antrieb als Parallel-Hybrid-Antrieb ausgebildet ist, so dass der Verbrennungsmotor (7) und der Elektromotor (5) nicht nur alternativ, sondern auch kumulativ Drehmoment in das Getriebe (3) einleiten können.

4. Doppelkupplung nach einem der Ansprüche 1 bis 3, **dadurch gekennzeichnet, dass** in einem Verbrennungsantriebszustand die erste und die zweite Kupplung (K1, K2) der Doppelkupplung (1) geschlossen sind und der Elektromotor (5) abgeschaltet ist.

5. Doppelkupplung nach einem der Ansprüche 1 bis 3, **dadurch gekennzeichnet, dass** in einem Elektroantriebszustand ausschließlich die erste Kupplung (K1) der Doppelkupplung (1) geschlossen ist.

6. Doppelkupplung nach einem der Ansprüche 1 bis 3, **dadurch gekennzeichnet, dass** in einem Ladezustand zumindest die erste Kupplung (K1) der Doppelkupplung (1) geschlossen ist und der Elektromotor (5) als Generator zum Laden einer Energiespeichereinrichtung genutzt werden kann.

7. Doppelkupplung nach einem der Ansprüche 1 bis 3, **dadurch gekennzeichnet, dass** in einem Boostzustand die erste und die zweite Kupplung (K1, K2) der Doppelkupplung (1) geschlossen sind und die Ausgangswelle (4) sowohl vom Verbrennungsmotor (7) als auch vom Elektromotor (5) angetrieben ist.

8. Doppelkupplung nach einem der Ansprüche 1 bis 7, **dadurch gekennzeichnet, dass** zwischen dem Elektromotor (5) und einer koaxial zur Ausgangswelle (4) zum Getriebe (3) hin verlaufenden Außenabtriebswelle (8) eine dritte Kupplung (K3) angeordnet ist.

9. Doppelkupplung nach Anspruch 8, dass die Ausgangswelle (4) der Doppelkupplung (1) mit einer ersten Gruppe (9) von Gängen und die Außenabtriebswelle (8) mit einer zweiten Gruppe (10) von Gängen des Getriebes (3) antriebsverbunden ist.

10. Doppelkupplung nach Anspruch 9, **dadurch gekennzeichnet, dass** in einem Verbrennungsantriebszustand zum Antrieb des Getriebes (3) in einem Gang der ersten Gruppe (9) ausschließlich die erste und die zweite Kupplung (K1, K2) der Doppelkupplung (1) geschlossen sind und zum Antrieb des Getriebes (3) in einem Gang der zweiten Gruppe (10) ausschließlich die erste und die dritte Kupplung (K1, K3) der Doppelkupplung (1) geschlossen sind und der Elektromotor (5) jeweils abgeschaltet ist.

11. Doppelkupplung nach Anspruch 9, **dadurch gekennzeichnet, dass** in einem Elektroantriebszustand zum Antrieb des Getriebes (3) in einem Gang der ersten Gruppe (9) ausschließlich die zweite Kupplung (K2) der Doppelkupplung (1) geschlossen ist und zum Antrieb des Getriebes (3) in einem Gang der zweiten Gruppe (10) ausschließlich die dritte Kupplung (K3) der Doppelkupplung (1) geschlossen ist, der Verbrennungsmotor (7) jeweils abgeschaltet ist.

12. Doppelkupplung nach einem der Ansprüche 1 bis 11, **dadurch gekennzeichnet, dass** die Ausgangswelle (4) koaxial durch den Elektromotor (5) verläuft.

13. Kraftfahrzeug mit einer Doppelkupplung (1) nach einem der Ansprüche 1 bis 12.
